# FASCICULE DE BREVET EUROPEEN

(11) **EP 2 805 524 B1**
(45) Date de publication et mention de la délivrance du brevet: **02.12.2015**
(21) Numéro de dépôt: 13700106.1
(22) Date de dépôt: 10.01.2013
(51) Int. Cl.: H04Q 1/02

(54) **DISPOSITIF-SUPPORT EMPLOYÉ POUR LE CÂBLAGE D'UN BANDEAU DE BRASSAGE DANS UNE BAIE DE BRASSAGE**
TRÄGERVORRICHTUNG ZUR VERDRAHTUNG EINER SCHALTTAFEL IN EINEM SCHALTSCHRANK
SUPPORT DEVICE USED FOR THE WIRING OF A PATCH PANEL IN A PATCH CLOSET

(30) Priorité: 18.01.2012 FR 1250498
(43) Date de publication de la demande: 26.11.2014
(73) Titulaire: Schneider Electric Industries SAS, 92500 Rueil-Malmaison (FR)
(72) Inventeur: MASSE, Dominique, F-91360 Epinay sur Orge (FR); ARANDA-MARTINEZ, Yolanda, E-08027 Barcelona (ES); DURAND-ALIKER, Thibault, F-75017 Paris (FR)
(74) Mandataire: Bié, Nicolas
(86) Numéro de dépôt international: PCT/EP2013/050346
(87) Numéro de publication internationale: WO 2013/107679

(56) Documents cités:
- US-A- 5 575 665
- US-A- 5 788 087

## Description

La présente invention se rapporte à un dispositif-support employé pour le câblage d'un bandeau de brassage dans une baie de brassage.

### Etat de la technique

Une baie de brassage comporte en règle générale deux montants de fixation verticaux parallèles identiques. Chaque montant de fixation comporte plusieurs emplacements de fixation échelonnés sur sa longueur, chaque emplacement de fixation comportant par exemple un ou plusieurs orifices. Plusieurs bandeaux de brassage accueillant des connecteurs réseau sont susceptibles d'être positionnés de manière transversale par rapport aux deux montants et fixés à chacune de leurs extrémités sur les montants de fixation. Les bandeaux de brassage sont installés verticalement, les uns au-dessus des autres, le long des montants de fixation.

Un exemple d'une telle baie de brassage est décrite dans le document US5788087, Ortronics Inc., publié le 4/8/1998.

Avant fixation sur les montants de fixation, le bandeau de brassage doit être câblé. Le câblage est réalisé à l'arrière de chaque connecteur déjà en place sur le bandeau. Chaque fil du câble à raccorder sur le connecteur est poussé par l'opérateur à l'aide d'un outil à l'intérieur d'un contact autodénudant du connecteur. L'espace étant parfois réduit autour de la baie de brassage, l'opérateur chargé du câblage ne dispose pas toujours d'un support adapté pour soutenir le bandeau lors de l'enfoncement des fils dans les contacts autodénudants. L'une des solutions employée aujourd'hui consiste à retourner le bandeau de brassage et à le fixer à l'envers sur les montants de fixation de manière à pouvoir accéder à l'arrière de chaque connecteur. Cette solution permet d'effectuer le travail à la lumière mais la position de travail de l'opérateur s'avère plutôt inconfortable, notamment lorsque le bandeau de brassage est fixé en hauteur. De plus, une fois le câblage des connecteurs d'un bandeau de brassage terminé, l'opérateur doit encore démonter le bandeau de brassage pour le fixer à l'endroit sur les montants de fixation.

Le but de l'invention est de proposer une solution permettant à l'opérateur de réaliser facilement le câblage des connecteurs d'un bandeau de brassage, dans une position confortable et de limiter les opérations de montage-démontage du bandeau de brassage.

### Exposé de l'invention

Ce but est atteint par un dispositif-support employé pour le câblage d'un bandeau de brassage dans une baie de brassage, ladite baie de brassage comportant un premier montant de fixation et un deuxième montant de fixation parallèles dotés chacun de plusieurs emplacements de fixation échelonnés suivant leur longueur, ledit dispositif comprenant un premier organe de support destiné à être fixé sur le premier montant de fixation et un deuxième organe de support destiné à être fixé sur le deuxième montant de fixation, et chaque organe de support comportant au moins une surface d'appui contre laquelle peut venir s'appuyer le bandeau de brassage, et des moyens de blocage destinés à coopérer avec le bandeau de brassage pour caler le bandeau de brassage dans le plan défini par les surfaces d'appui.

Selon une particularité, chaque organe de support comporte un corps sur lequel est formée la surface d'appui et les moyens de blocage comportent un logement réalisé dans ledit corps.

Selon une autre particularité, la surface d'appui de chaque organe de support est inclinée.

Selon une autre particularité, le premier organe de support et le deuxième organe de support sont identiques.

Selon une autre particularité, chaque organe de support comporte deux surfaces d'appui symétriques et situées de part et d'autre du logement.

Selon une autre particularité, chaque organe de support comporte des éléments d'accrochage s'étendant vers l'arrière du corps et aptes à venir s'accrocher dans des orifices réalisés aux emplacements de fixation d'un montant de fixation.

Selon une autre particularité, chaque organe de support comporte un crochet formé vers l'avant du corps pour accrocher un outil.

Selon une autre particularité, chaque organe de support comporte au moins une ouverture à travers laquelle peut venir se ranger un outil.

L'invention concerne également une baie de brassage comportant deux montants de fixation parallèles dotés chacun de plusieurs emplacements de fixation échelonnés suivant leur longueur, un dispositif-support, tel que défini ci-dessus, étant fixé sur les montants de fixation de manière à pouvoir supporter un bandeau de brassage lors de son câblage et avant sa fixation sur les montants de fixation.

### Brève description des figures

D'autres caractéristiques et avantages vont apparaître dans la description détaillée qui suit faite en regard des dessins annexés dans lesquels :
- la figure 1 représente, selon une première vue en perspective, un organe de support employé dans le dispositif-support de l'invention,
- la figure 2 représente, selon une deuxième vue en perspective, l'organe de support employé dans le dispositif-support de l'invention,
- la figure 3 représente, vu en perspective, un bandeau de brassage destiné à être fixé dans une baie de brassage,
- la figure 4 représente, vu de l'avant, le dispositif-support de l'invention monté dans une baie de brassage et supportant un bandeau de brassage en cours de câblage,

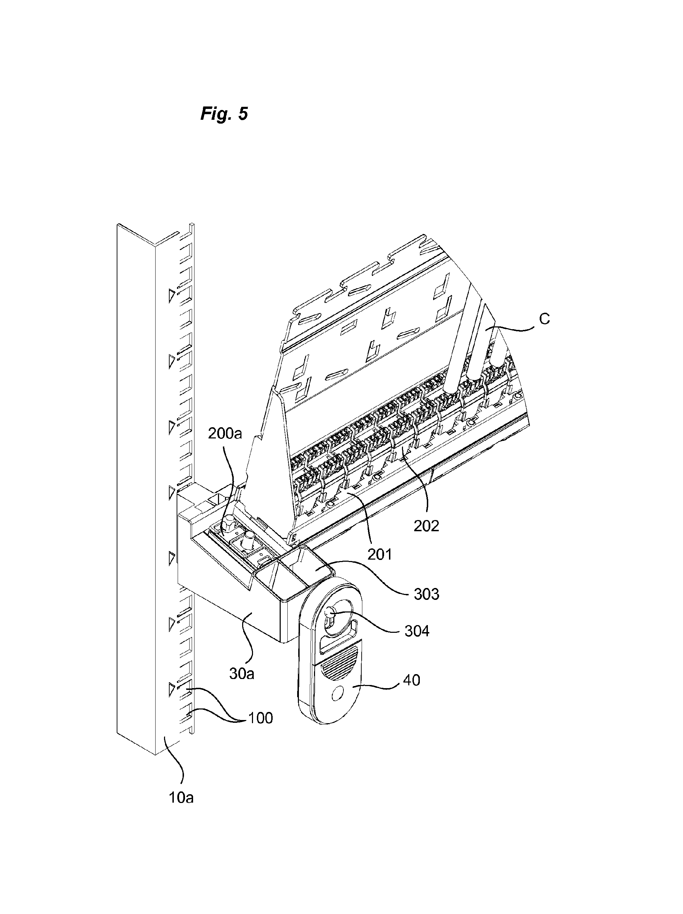

- la figure 5 représente, vu de l'avant, un organe de support du dispositif-support fixé sur un montant de fixation de la baie de brassage,
- la figure 6 représente, vu de l'arrière, l'organe de support du dispositif-support fixé sur un montant de fixation de la baie de brassage.

### Description détaillée d'au moins un mode de réalisation

L'invention concerne un dispositif-support employé pour le câblage des connecteurs d'un bandeau de brassage dans la baie de brassage.

Dans la suite de la description, les termes avant, arrière, intermédiaire, vertical, supérieur, inférieur doivent être compris en prenant comme référence le dispositif-support fixé dans une baie de brassage.

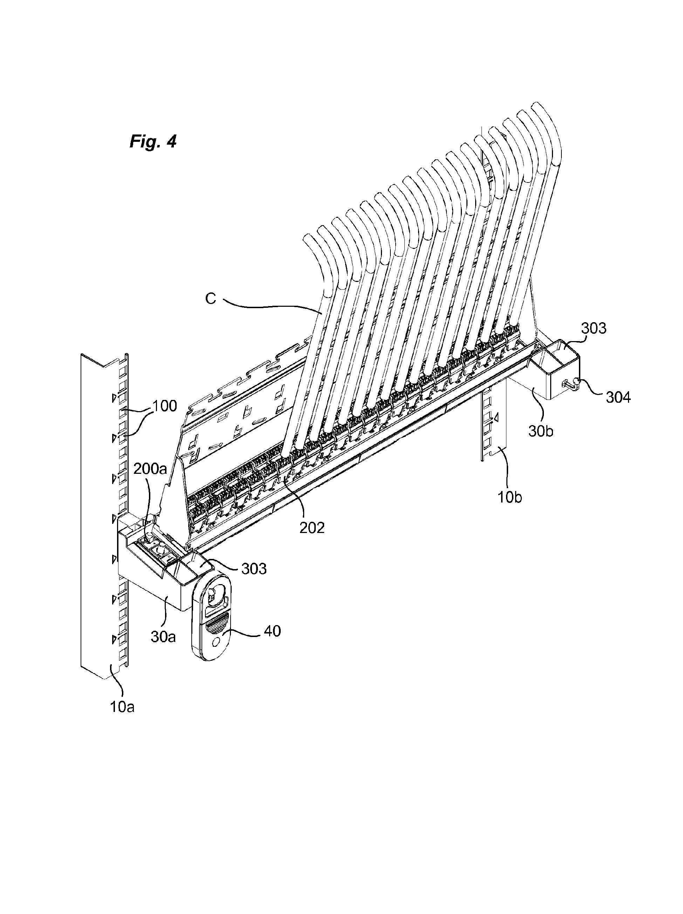

Une baie de brassage représentée sur la figure 4 comporte deux montants 10a, 10b de fixation verticaux parallèles entre lesquels est fixé chaque bandeau de brassage 20. Plusieurs bandeaux de brassage sont par exemple fixés les uns au-dessus des autres le long des montants de fixation. Chaque montant 10a, 10b de fixation comporte des orifices 100 répartis sur sa longueur et permettant de créer plusieurs emplacements de fixation pour les bandeaux de brassage 20.

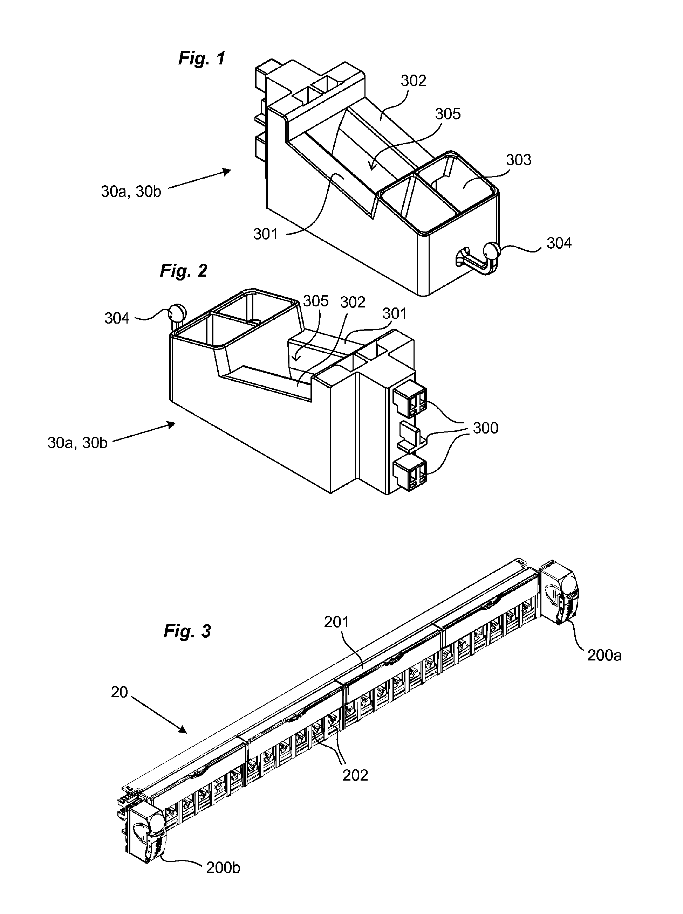

Comme représenté sur la figure 3, un bandeau de brassage 20 est symétrique et comporte deux extrémités dotées chacune d'un système de fixation 200a, 200b et séparées d'une plaque 201 agencée pour accueillir les connecteurs 202. La plaque 201 comporte une façade avant plane sur laquelle débouche l'entrée des connecteurs du bandeau de brassage et une façade arrière traversée par l'arrière des connecteurs 202. A chaque extrémité, chaque système de fixation 200a, 200b s'étend vers l'avant du bandeau de brassage 20, formant une excroissance par rapport à la façade avant de la plaque 201, et comporte par exemple trois éléments de fixation du bandeau sur un montant 10a, 10b de fixation.

Le dispositif-support de l'invention comporte deux organes de support 30a, 30b identiques permettant de supporter un bandeau de brassage 20 pendant le câblage de ses connecteurs 202 et avant son montage dans la baie de brassage. La façade avant du bandeau de brassage 20 est amenée en appui contre le dispositif-support de manière à pouvoir câbler l'arrière de chaque connecteur 202 du bandeau de brassage avec un câble C (figure 4).

Les deux organes de support 30a, 30b sont identiques et sont interchangeables. Pour cela, ils sont symétriques par rapport à un plan médian vertical.

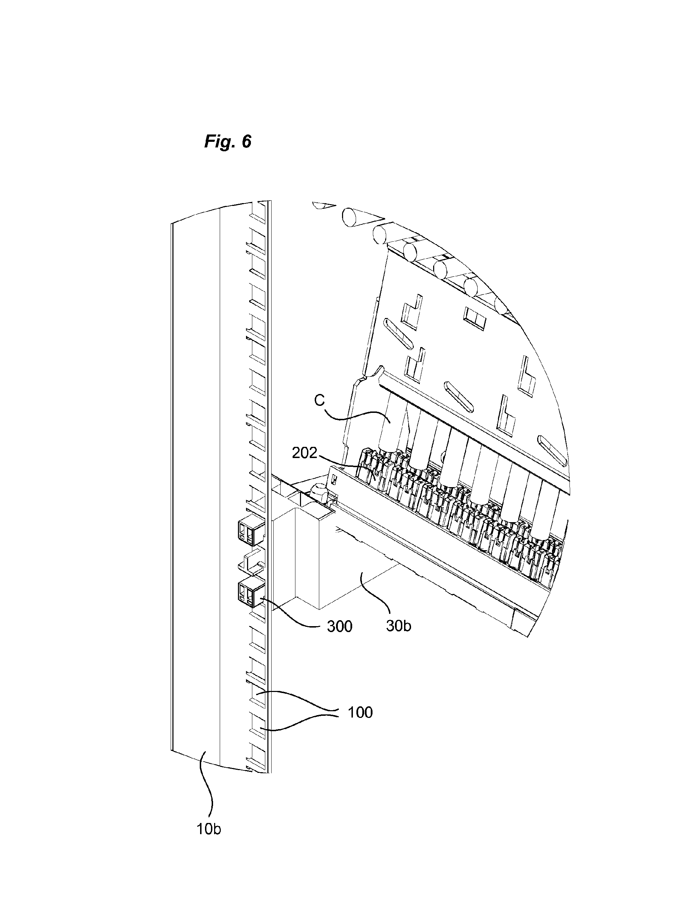

En référence aux figures 1 et 2, chaque organe de support 30a, 30b comporte un corps, réalisé par exemple en matière plastique et doté d'une partie avant, d'une partie arrière et d'une partie intermédiaire. Sur sa partie arrière, l'organe de support comporte des éléments d'accrochage 300 aptes à coopérer avec un ou plusieurs orifices 100 de fixation du montant de fixation 10a, 10b pour fixer l'organe de support 30a, 30b sur le montant. Sur les figures 1, 2 et 6, on peut voir que l'organe de support 30a, 30b comporte trois éléments d'accrochage 300 permettant de s'engager dans trois orifices 100 du montant de fixation.

Chaque organe de support 30a, 30b comporte également une face inférieure plane. Ainsi, en variante de réalisation, les deux organes de support 30a, 30b peuvent également être posés sur un plan de travail afin de venir supporter le bandeau de brassage 20 pendant son câblage.

Sur sa partie intermédiaire, l'organe de support 30a, 30b comporte deux surfaces d'appui 301, 302 supérieures permettant de supporter le bandeau de brassage 20 lors de son câblage. Les organes de support 30a, 30b étant identiques et interchangeables, les deux surfaces d'appui 301, 302 sont symétriques par rapport au plan vertical précité. Préférentiellement, sur chaque organe de support 30a, 30b, une seule de ces deux surfaces d'appui 301, 302 est employée lors du câblage. En effet, lorsque le dispositif-support est employé, seules les deux surfaces d'appui (surface d'appui 301 pour l'organe 30a et surface d'appui 302 pour l'organe 30b) situées vers l'intérieur sont employées.

Lorsque les deux organes de support 30a, 30b sont fixés à la même hauteur sur les deux montants de fixation (figure 4), les surfaces d'appui 301, 302 des deux organes de support 30a, 30b sont situées dans un même plan. De l'arrière vers l'avant, chaque surface d'appui 301, 302 est légèrement inclinée vers le bas par rapport à un plan horizontal. De cette manière, l'opérateur peut facilement visualiser et accéder à la partie arrière du bandeau de brassage 20 lorsque celui-ci est installé sur le dispositif-support.

Sur sa partie intermédiaire, l'organe de support 30a, 30b comporte également un logement 305 situé entre ses deux surfaces d'appui 301, 302. En position sur le montant de fixation 10a, 10b, le logement 305 est situé dans le même plan vertical que les orifices 100 des montants 10a, 10b de manière à pouvoir recevoir une excroissance du bandeau de brassage 20 comportant le système de fixation 200a, 200b. Les excroissances comportant les systèmes de fixation 200a, 200b étant formées en avant par rapport au plan de la plaque 201 du bandeau de brassage 20, celles-ci se positionnent à l'intérieur des deux logements 305 jusqu'à ce que la plaque 201 du bandeau de brassage 20 vienne en appui contre les surfaces d'appui 301, 302. Les deux logements 305, qui sont donc séparés d'une distance correspondant à la longueur de la plaque, permettent de servir de moyens de blocage du bandeau de brassage 20 lorsque celui-ci est positionné sur le dispositif-support. Lorsque les excroissances du bandeau sont logées dans les logements 305, le bandeau de brassage 20 se trouve être en appui contre les deux surfaces d'appui 301, 302 des organes de support 30a, 30b et calé dans toutes les directions du plan comportant les surfaces d'appui (figure 4). Si le bandeau de brassage ne comporte pas d'excroissances, le bandeau de brassage peut tout de même être en appui contre les surfaces d'appui 301, 302 des organes de support 30a, 30b du dispositif-support.

Sur sa partie avant, l'organe de support comporte par exemple deux ouvertures 303 adjacentes qui le traversent de bas en haut afin de servir de porte-outil. De plus, l'organe de support peut également comporter un crochet 304 destiné également à supporter un outil 40.

## Revendications

1. Dispositif-support employé pour le câblage d'un bandeau de brassage (20) dans une baie de brassage, un bandeau de brassage (20) comprenant deux extrémités dotées chacune d'un système de fixation (200a, 200b) et séparées d'une plaque (201) agencée pour accueillir des connecteurs (202), ladite plaque (201) comportant une façade avant plane sur laquelle débouche l'entrée des connecteurs du bandeau de brassage et une façade arrière traversée par l'arrière des connecteurs (202), ladite baie de brassage comportant un premier montant de fixation (10a) et un deuxième montant de fixation (10b) parallèles dotés chacun de plusieurs emplacements de fixation échelonnés suivant leur longueur, ledit dispositif étant **caractérisé en ce qu'**il comprend un premier organe de support (30a) destiné à être fixé sur le premier montant de fixation (10a) et un deuxième organe de support (30b) destiné à être fixé sur le deuxième montant de fixation (10b), et **en ce que** chaque organe de support comporte au moins une surface d'appui (301, 302) contre laquelle peut venir s'appuyer la façade avant du bandeau de brassage, de manière à pouvoir câbler l'arrière de chaque connecteur (202) du bandeau de brassage avec un câble, et des moyens de blocage destinés à coopérer avec le bandeau de brassage pour caler le bandeau de brassage dans le plan défini par les surfaces d'appui.

2. Dispositif-support selon la revendication 1, **caractérisé en ce que** chaque organe de support (30a, 30b) comporte un corps sur lequel est formée la surface d'appui (301, 302) et **en ce que** les moyens de blocage comportent un logement (305) réalisé dans ledit corps.

3. Dispositif-support selon la revendication 2, **caractérisé en ce que** la surface d'appui de chaque organe de support est inclinée.

4. Dispositif-support selon la revendication 2 ou 3, **caractérisé en ce que** le premier organe de support (30a) et le deuxième organe de support (30b) sont identiques.

5. Dispositif-support selon la revendication 4, **caractérisé en ce que** chaque organe de support (30a, 30b) comporte deux surfaces d'appui (301, 302) symétriques et situées de part et d'autre du logement (305).

6. Dispositif-support selon l'une des revendications 2 à 5, **caractérisé en ce que** chaque organe de support (30a, 30b) comporte des éléments d'accrochage s'étendant vers l'arrière du corps et aptes à venir s'accrocher dans des orifices (100) réalisés aux emplacements de fixation d'un montant de fixation (10a, 10b).

7. Dispositif selon l'une des revendications 2 à 6, **caractérisé en ce que** chaque organe de support (30a, 30b) comporte un crochet (304) formé vers l'avant du corps pour accrocher un outil.

8. Dispositif selon l'une des revendications 2 à 7, **caractérisé en ce que** chaque organe de support (30a, 30b) comporte au moins une ouverture (303) à travers laquelle peut venir se ranger un outil.

9. Baie de brassage comportant deux montants de fixation (10a, 10b) parallèles dotés chacun de plusieurs emplacements de fixation échelonnés suivant leur longueur, **caractérisé en ce que** ladite baie comprend un dispositif-support, conforme à l'une des revendications précédentes, fixé sur les montants de fixation (10a, 10b) de manière à pouvoir supporter un bandeau de brassage (20) lors de son câblage et avant sa fixation sur les montants de fixation (10a, 10b).

## Patentansprüche

1. Tragvorrichtung, die für die Verkabelung einer Patchleiste (20) in einem Schaltschrank verwendet wird, wobei eine Patchleiste (20) zwei Enden enthält, die je mit einem Befestigungssystem (200a, 200b) versehen und von einer Platte (201) getrennt sind, die eingerichtet ist, um Verbinder (202) aufzunehmen, wobei die Platte (201) eine ebene Frontseite, an der der Eingang der Verbinder der Patchleiste mündet, und eine Rückseite aufweist, die vom hinteren Teil der Verbinder (202) durchquert wird, wobei der Schaltschrank einen ersten Befestigungsständer (10a) und einen zweiten Befestigungsständer (10b) aufweist, die parallel und je mit mehreren über ihre Länge verteilten Befestigungsstellen versehen sind, wobei die Vorrichtung **dadurch gekennzeichnet, dass** sie ein erstes Tragorgan (30a), das dazu bestimmt ist, am ersten Befestigungsständer (10a) befestigt zu werden, und ein zweites Tragorgan (30b) enthält, das dazu bestimmt ist, am zweiten Befestigungsständer (10b) befestigt zu werden, und dass jedes Tragorgan mindestens eine Auflagefläche (301, 302), gegen die sich die Frontseite der Patchleiste anlegen kann, um den hinteren Teil jedes Verbinders (202) der Patchleiste mit einem Kabel verkabeln zu können, und Blockiereinrichtungen aufweist, die dazu bestimmt sind, mit der Patchleiste zusammenzuwirken, um die Patchleiste in der von den Auflageflächen definierten Ebene zu fixieren.

2. Tragvorrichtung nach Anspruch 1, **dadurch gekennzeichnet, dass** jedes Tragorgan (30a, 30b) einen Körper aufweist, auf dem die Auflagefläche (301, 302) geformt ist, und dass die Blockiereinrichtungen eine im Körper hergestellte Aufnahme (305) aufweisen.

3. Tragvorrichtung nach Anspruch 2, **dadurch gekennzeichnet, dass** die Auflagefläche jedes Tragorgans geneigt ist.

4. Tragvorrichtung nach Anspruch 2 oder 3, **dadurch gekennzeichnet, dass** das erste Tragorgan (30a) und das zweite Tragorgan (30b) gleich sind.

5. Tragvorrichtung nach Anspruch 4, **dadurch gekennzeichnet, dass** jedes Tragorgan (30a, 30b) zwei symmetrische Auflageflächen (301, 302) aufweist, die sich zu beiden Seiten der Aufnahme (305) befinden.

6. Tragvorrichtung nach einem der Ansprüche 2 bis 5, **dadurch gekennzeichnet, dass** jedes Tragorgan (30a, 30b) Einhakeinrichtungen aufweist, die sich zur Rückseite des Körpers erstrecken und sich in Öffnungen (100) einhaken können, die an den Befestigungsstellen eines Befestigungsständers (10a, 10b) hergestellt sind.

7. Vorrichtung nach einem der Ansprüche 2 bis 6, **dadurch gekennzeichnet, dass** jedes Tragorgan (30a, 30b) einen Haken (304) aufweist, der zur Vorderseite des Körpers geformt ist, um ein Werkzeug aufzuhängen.

8. Vorrichtung nach einem der Ansprüche 2 bis 7, **dadurch gekennzeichnet, dass** jedes Tragorgan (30a, 30b) mindestens eine Öffnung (303) aufweist, durch die hindurch ein Werkzeug verstaut werden kann.

9. Schaltschrank, der zwei parallele Befestigungsständer (10a, 10b) aufweist, die je mit mehreren über ihre Länge verteilten Befestigungsstellen versehen sind, **dadurch gekennzeichnet, dass** der Schrank eine Tragvorrichtung nach einem der vorhergehenden Ansprüche enthält, die so an den Befestigungsständern (10a, 10b) befestigt ist, dass sie eine Patchleiste (20) bei ihrer Verkabelung und vor ihrer Befestigung an den Befestigungsständern (10a, 10b) tragen kann.

## Claims

1. Support device used for the wiring of a patch panel (20) in a patch closet, a patch panel (20) comprising two ends each provided with a fixing system (200a, 200b) and separated by a plate (201) arranged so as to receive connectors (202), said plate (201) comprising a planar front face onto which opens the entry of the connectors of the patch panel and a rear face through the rear of which pass the connectors (202), said patch closet comprising a first fixing upright (10a) and a second fixing upright (10b) which are parallel and are each provided with several fixing locations which are graded according to their length, said device being **characterized in that** it comprises a first support device (30a) designed to be fixed to the first fixing upright (10a) and a second support device (30b) designed to be fixed to the second fixing upright (10b), and **in that** each support device comprises at least one bearing surface (301, 302) against which the front face of the patch panel can press such that it is possible to wire the rear of each connector (202) of the patch panel with a cable, and blocking means designed to engage with the patch panel to wedge the patch panel in the plane defined by the bearing surfaces.

2. Support device according to Claim 1, **characterized in that** each support device (30a, 30b) comprises a body on which is formed the bearing surface (301, 302) and **in that** the blocking means comprise a recess (305) created in said body.

3. Support device according to Claim 2, **characterized in that** the bearing surface of each support device is inclined.

4. Support device according to Claim 2 or 3, **characterized in that** the first support device (30a) and the second support device (30b) are identical.

5. Support device according to Claim 4, **characterized in that** each support device (30a, 30b) comprises two bearing surfaces (301, 302) which are symmetric and are located on either side of the recess (305).

6. Support device according to one of Claims 2 to 5, **characterized in that** each support device (30a, 30b) comprises fastening elements which extend towards the rear of the body and are able to fasten in orifices (100) created at the fixing locations of a fixing upright (10a 10b).

7. Device according to one of Claims 2 to 6, **characterized in that** each support device (30a, 30b) comprises a hook (304) formed towards the front of the body for hooking onto a tool.

8. Device according to one of Claims 2 to 7, **characterized in that** each support device (30a, 30b) comprises at least one opening (303) through which a tool can be arranged.

9. Patch closet comprising two parallel fixing uprights (10a, 10b) each provided with several fixing locations which are graded according to their length, **characterized in that** said closet comprises a support device according to one of the preceding claims, fixed on the fixing uprights (10a, 10b) so as to be able to support a patch panel (20) during wiring of the latter and before the latter is fixed on the fixing uprights (10a, 10b).
